# EUROPEAN PATENT SPECIFICATION

(11) **EP 2 572 571 B1**
(45) Date of publication and mention of the grant of the patent: **14.09.2016**
(21) Application number: 12185856.7
(22) Date of filing: 25.09.2012
(51) Int. Cl.: A01G 9/10

(54) **A rooting plug, a tray and a method**
Einwürzlungsstecker, Schale und Verfahren
Bouchon d'enracinement, plateau et procédé

(30) Priority: 26.09.2011 NL 2007469
(43) Date of publication of application: 27.03.2013
(73) Proprietor: Max Roots B.V., 2681 TW Monster (NL)
(72) Inventor: Dijkstra, Gerrit, 2685 LP Poeldijk (NL)
(74) Representative: V.O.

(56) References cited:
- WO-A2-2009/088774
- FR-A1- 2 693 623
- GB-A- 2 265 536
- NL-C2- 1 013 023

## Description

The invention relates to a rooting plug for cultivation of a plant, comprising a substantially cylindrical plug body having a top surface, an outer side surface and a bottom surface.

A known rooting plug comprises a, slightly tapered, but substantially circular cylindrical plug body having a bore downwardly extending from a top surface of the body. In order to plant a plant having roots in said known rooting plug the roots are pushed into the root chamber through the stem passage.

Although the size of the bore radius might be chosen to correspond with the size of the root structure to some extent, often the inserted root structure is not secured firmly enough in the bore due to an oversized bore radius, which is chosen to counteract extensive root damage. As a result, the accommodated plant may fall over and/or the root structure may not make sufficient contact with the plug to exchange enough water and/or nutrients. This problem may be solved by inserting filler material, such as soil, into the bore after the insertion of the root structure in there. However, this is a cumbersome and laborious process. Alternatively, the size of the radius of the bore is commonly chosen to be so small that the inserted root structure is firmly secured inside the plug without the need of topping up the bore. However, in this case the root structure generally gets severely harmed during its insertion into the root chamber actually being too tight. This problem can even be aggravated when roots of the root structure to be inserted stand outwards in radial directions, and/or when the roots belong to a plant with a very vulnerable root structure, e.g. a plant belonging to the Orchid family or the Bromeliad family and/or a plant being in a relatively vulnerable grow stadium such as a young plant, e.g. grown from a seed or grown by applying a tissue culture technique.

It is an object of the invention to obtain a rooting plug according to the preamble wherein at least one of the disadvantages is reduced. In particular, the invention aims at obtaining a rooting plug wherein the inserting process is improved. More in particular, the invention aims at obtaining a rooting plug that, on the one hand, enables a relatively simple insertion of the root structure without severely harming it, while, on the other hand, the root structure is nevertheless relatively firmly secured in the plug. Thereto, according to an aspect of the invention, a rooting plug according to claim 1 is provided.

By providing a slot opening for laterally inserting the root structure into the root chamber, the root structure can be inserted in the root chamber without pushing relatively vulnerable roots downwardly through a relatively tight stem passage, thereby improving the inserting process. Since the root structure is inserted relatively easily via a lateral direction, the chamber dimensions can be chosen such that the root structure is secured tightly while reducing a risk of damage to the root structure. Also it may now be counteracted that radially outstanding roots get stuck and/or get pushed upwardly relatively to the root structure, thereby further reducing the risk of severely damaging the roots.

By providing the plug body with a side wall surrounding the chamber, wherein the side wall is provided with circumferential mutually facing end sections defining therebetween the slot opening, a simply structured rooting plug can be provided relatively easily. Preferably, the side wall end sections are movable in a circumferential direction to open and close a root passage to the chamber.

By arranging the rooting plug such that, in the closed state, the root chamber defines a cavity extending in the longitudinal direction, sufficient room may be provided for accommodating the root structure, thereby counteracting that the root structure gets excessively squeezed and/or that one or a multiplicity of roots snaps.

It is noted that patent publication WO 2009/088774 discloses systems and devices for the handling and transport of plants, cuttings, tissue-cultured plantlets and/or seeds. A system comprises a prop-string having one or more prop-tubes affixed thereto and in alignment with the cells of a transplant liner tray.

By arranging the side wall for securing the root structure in the root chamber in the closed state, the root structure can be secured relatively firmly in the root chamber in a relatively simple manner.

By providing the rooting plug with fixation means, the plug may be arranged to be kept in the closed state.

By arranging the side wall end sections to be biased in the open state, the inserting process can be improved and may for instance relatively easily be at least partly automated.

The invention also relates to a tray as defined in claim 13.

Further, the invention relates to a method of inserting at least a part of a root structure of a plant into a root chamber of a rooting plug, as defined in claim 14.

Advantageous embodiments according to the invention are described in the appended claims.

By way of non-limiting example only, embodiments of the present inventions will now be described with reference to the accompanying figures in which:
Figure 1 shows a schematic perspective view of a rooting plug according the invention in an open state; and
Figure 2 shows a schematic perspective view of the rooting plug of Fig. 1 in a closed state.

The embodiments disclosed herein are shown as examples only and should by no means be understood as limiting the scope of the claimed invention in any way. In this description and in the figures, the same or similar elements have the same or similar reference signs.

It is noted that in this description a plant has to be understood as at least including but not necessarily limited to a land plant. The plant does not need to be in a particular growth phase, and may for example be a seedling or a young plant. In advantageous embodiments the plant may for instance be a bromeliad or an orchid.

It is further noted that in this description a root structure has to be understood as at least including but not necessarily limited to a root system, e.g. a system of roots, which root system may include at least a part of the roots and/or aerial roots of the plant. For example, the root structure may alternatively or additionally be formed by a part of a cutting, which part is rooting or is capable of rooting. Further, the root structure may for instance be formed by a further, relatively small, rooting plug of a plant already rooted in said relatively small plug. When said rooted plant is transplanted to a larger rooting plug, e.g. the rooting plug according to an aspect of the invention, the plant does not need to be removed from the relatively small rooting plug, since the relatively small rooting plug can be inserted into a root chamber of the relatively large rooting plug.

In this description words like substantially or about should be understood as meaning that a slight variation on or deviation from an orientation or dimension or other product or method related feature is possible within the scope, at least such as would be understood by the skilled person. Such variation or deviation can for example be between 0 and 20%, more specifically between 0 and 15%, such as for example between 0 and 10% of the originally disclosed value or orientation or the like. By way of example this should be understood as meaning that for a direction an angular variation would be allowable, such as when shapes are defined as being substantially cylindrically-shaped, the shape may be tapered to some extent that at least side wall deviations from a cylindrical shape of less than e.g. 18, 14, 11, 9, 7 or 5 degrees would be within the scope, whereas for perpendicular directions or parallel directions, including an angle of 180 degrees, at least similar variations would be within the scope.

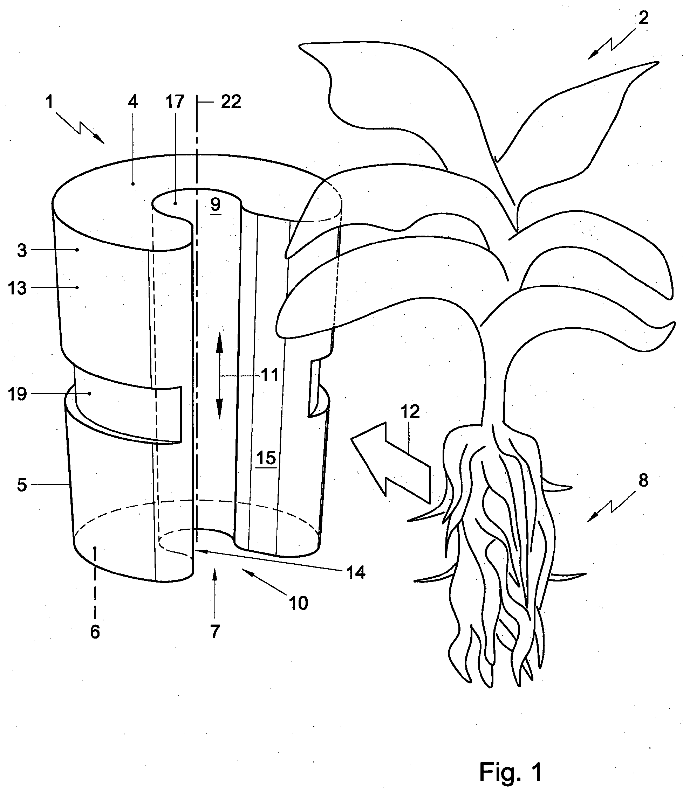

Figure 1 shows a schematic perspective view of a rooting plug 1 according the invention in an open state. The rooting plug 1 is for cultivation of a plant 2, and comprises a substantially cylindrical plug body 3 having a top surface 4, an outer side surface 5 and a bottom surface 6. Although in the shown embodiment the plug body is substantially circular cylindrically-shaped, the plug body may have another cylindrical shape, for instance the plug can have substantially the shape of a cuboid and/or prisms. The plug body 3 comprises a root chamber 7 for accommodating at least a part of a root structure 8 of the plant 2. Preferably, the root chamber is substantially cylindrically-shaped, e.g. having substantially the shape of a circular cylinder, an elliptical cylinder, a cuboid or a prism. Although the root chamber and the plug itself may preferably have a similar shape, the root chamber can have a shape differing from the shape of the plug. For example, the root chamber can have the shape of a cuboid, while the root plug itself can e.g. be circular cylindrically-shaped. Furthermore, the root chamber 7 may have a non-cylindrical shape, such as substantially the shape of a ball, an oblate spheroid or a pyramid. The plug body further has a stem passage 9 extending through the top surface 4 of the plug body 3 to the root chamber 7.

Further, the plug body 3 has a receptive slot opening 10 in the outer side surface 5 of the plug body. The slot opening 10 extends in a longitudinal direction 11 from the bottom surface 6 to the top surface 4 and in a lateral direction 12 from the outer side surface 5 to the root chamber 7 and the stem passage 9. The slot opening 10 is for laterally inserting the root structure 8 into the root chamber7.

Although in the shown embodiment the substantially cylindrical plug body 3 and the root chamber 7 are slightly tapered in a downward direction, the plug 1, plug body 3 and or root chamber 7 may alternatively or additionally be tapered in an upward direction and/or may taper to a lesser extent or a lesser extent than in the shown embodiment. For example, the plug 1, plug body 3 and or root chamber 7 may at least partly be tapered to e.g. 3, 5, 7, 11, 15 or 20 degree.

Preferably, the stem passage 9 has, seen in the horizontal plane (e.g. a plane substantially parallel with the bottom and/or top side of the rooting plug), a substantially similar cross section as the root chamber 7. The root chamber and the stem passage can together form a cylindrical passageway through the rooting plug extending from the top surface 4 to the bottom surface 6 of said plug 1. In the shown embodiment, the rooting plug 1 substantially forms a hollow tube being slit open in its longitudinal direction. Alternatively, the chamber is provided with a bottom wall. Further, the stem passage can have a different shape and/or size as the root chamber. For example, the stem passage may have a cross section substantially differing from the root chambers cross section, e.g. being substantially smaller, wider and/or having a different shape.

In advantageous embodiments the root chamber 7 can be centrally located in the rooting plug 1. This is, a central axis 22 of the root chamber 7 can substantially coincide with a central axis of the rooting plug itself. However, it is noted that the central axes do not need to coincide. For example, the root chamber can be eccentrically located in the rooting plug. Further, an outer wall 17 of the root chamber 7 forming an inner side surface 17 of the rooting plug can be substantially parallel with the outer side surface 5 of said plug 1.

Here, the plug body 3 comprises a side wall 13 surrounding the root chamber 7. Further, the plug body 3 is here provided with circumferential mutually facing end sections 14, 15 defining therebetween the slot opening 10. In the open state shown in Fig. 1 the end sections 14, 15 are offset with respect to each other. Therefore, in the shown state, the receptive opening 10 stands agape between said end sections 14, 15. Preferably, the end sections 14, 15 are substantially parallel to each other. In the open state, the slot opening 10 forms a plant passage for enabling an insertion of the root structure 8 and/or other plant parts from exterior towards the root chamber and/or the stem passage. In the shown embodiment each of the end sections 15 comprises a substantially flat end surface, which at one side may smoothly merge into the outer wall 17 of the root chamber 7 and which at the other side may smoothly merge into the side wall 13 of the plug. This is, the corners between the flat end surface and the outer wall 17 and/or the side wall 13 may be substantially rounded off, for instance for counteracting damage to the root structure 8. However, said corners may be not substantially rounded off, e.g. the corners can be sharp corners or can be chamfered. Alternatively, the or each end section 15 does not comprise a substantially flat end surface, but a curved end surface, for instance a convex surface.

The side wall end sections 14, 15 can be movable in a circumferential direction to define the open state shown in Fig. 1 and a closed state wherein the end sections abut each other. Thereto, the side wall end sections, the plug body and/or the rooting plug may be at least partly resilient. Alternatively or additionally, the side wall end sections, the plug body and/or the rooting plug may comprise a single or a multiple number of e.g. hinges or so called living hinges. In an advantageous embodiment the side wall end sections 14, 15 are biased in the open state. Therefore, the root structure 8 can be inserted into the root chamber without the hassle of forcing the end sections apart.

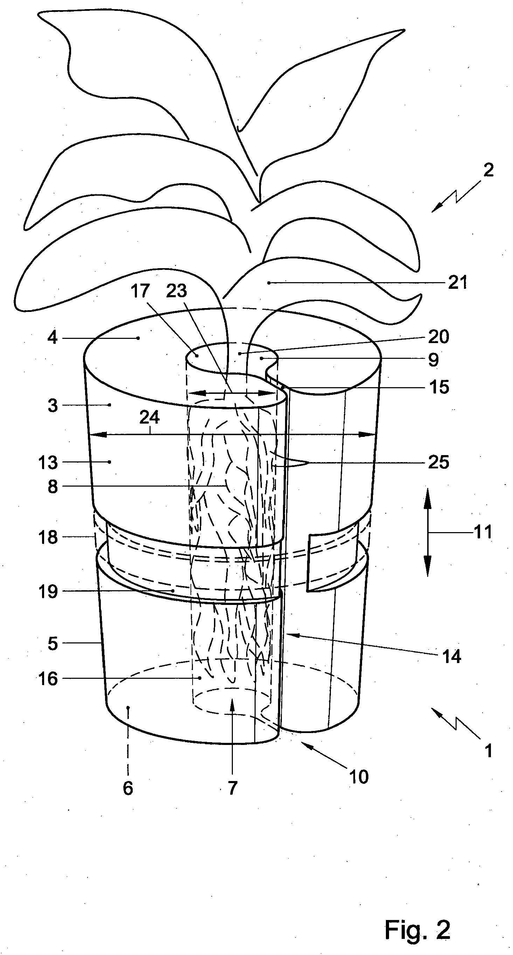

Figure 2 shows a schematic perspective view of the rooting plug 1 of Fig. 1 in a closed state. The closed state forms the closed state of the rooting plug. As can be seen, here, the end sections 14, 15 abut each other. In this context, abutting of the end sections has to be understood as at least including but not necessarily limited to the end sections being located that close to each other that they substantially close off the receptive opening 10, e.g. said receptive opening 10 closes off the plant passage and can not any longer allow through the root structure 8 and/or the other plant parts. As an example, the end sections 14, 15 should be understood to be abutting as e.g. a protruding root 25 is jammed between said end sections.

Further, here, in the closed state, the root chamber 7 defines a cavity 16 extending in the longitudinal direction 11. For example, a width 23 of the chamber 7 may be e.g. about 10, 20, 35, 50 or 65% of a width 24 of the plug. Preferably, the chamber width 23 is at least circa 10%, at least circa 20%, at least circa 35%, at least circa 50% or at least circa 65% of the plug width 24. It is noted that said widths are preferably measured in a cross section of the plug substantially passing through both the central axis of the rooting plug 1 and the central axis 22 of the root chamber, more preferably at the same height seen in the longitudinal direction 11.

The width of the chamber is to be understood as a one-dimensional spatial extension of the chamber, mainly transverse to the central axis of the rooting plug or mainly transverse to the central axis of the root chamber. As an example, when the chamber has a circular cross section, transverse to one of said central axes, the width of the chamber is the diameter. When the chamber has a non-circular cross section, the chamber width is not uniquely defined. Then, the width then ranges between a minimum width and a maximum width, depending on the angle of the measuring line through the central axis. The width of the plug can be defined in a similar way. The above-mentioned ratio restrictions between the chamber width and the plug width imply that, in an advantageous embodiment of the invention, at least one of said restrictions is fulfilled when measuring along a particle line dimension, through and transverse to the central axis.

Similarly, the chamber can be designed to have a width exceeding a pre-defined minimum distance, e.g. greater than circa 0.5 cm, greater than circa 1 cm, greater than circa 2, cm, or greater than circa 5 cm.

By providing a root chamber having a non-trivial spatial extension, transverse to the central axis, room is available for accommodating the root structure of a plant without deforming said root structure.

In a preferred embodiment, in the open state, a width of the root chamber 7 measured through and transverse to the central axis of the rooting plug 1 is larger than the offset between the end sections 14, 15 of the side wall 13.

Further, preferably, in the closed state, a width 23 of the root chamber 7 measured through and transverse to a central axis of the rooting plug 1 is at least ten times larger than a distance between the end sections 14, 15 of the side wall 13.

By providing a root chamber having a substantial volume, also in the closed state of the plug, a root structure of a plant can be accommodated without any damage, or at least without severe damage to the roots of the plant.

Here, the rooting plug 1 accommodates the plant 2 at least partly. Although, the root structure 8 of the plant is here substantially completely accommodated in the root chamber 7, the root structure may alternatively be only partly accommodated in the chamber, e.g. a part of the root structure may protrude from e.g. a top or a bottom side of said chamber 7, and/or the substantially radially outstanding root 25 may at least partly protrude into the receptive opening 10. Here, the accommodated plant 2 is an orchid 2, but the plug may alternatively accommodate another plant 2, e.g. a bromeliad. The plant 2 may comprise a stem 20 which can stick out of the chamber through the stem passage 9. However, the plant does not need to comprise a stem 20. Alternatively or additionally, one or a multiple number of other plant parts, such as leafs 21, may pass through the stem passage 9.

In the closed state, the side wall 13 can be arranged for securing the root structure 8 in the root chamber 7. Thereto, the side wall 13 may form a claw which may clench the root structure. Further, the inner side surface 17 of the plug, e.g. a surface defining the cavity 16, may be arranged to counteract that a root structure inserted into the chamber 7 can slide down in the chamber. Thereto, the inner side surface 17 may be tapered, may at least partly be rough and/or may be provided with elements for counteracting shifting of the root structure, such as protrusions.

Further, the plug 1 can comprise fixation means 18 for substantially fixating the plug 1 in the closed state. The fixation means include a separate fixation means for attachment to the rooting plug, e.g. during the process of insertion the root structure into the rooting plug. For example, the fixation means 18 can comprise a fixation strap, tape and/or rubber band. Preferably, the fixation means 18 are made of a non-toxic and/or organic material, more preferably a biodegradable material. Additionally or alternatively, at least a part of the fixation means may form an integral part of the rooting plug. As an example, the fixation means 18 can comprise a protrusion, e.g. located at a first one 14 of the end sections and a hole in the second one 15 of the end sections, which protrusion and hole can cooperate to form a clickable connection.

Here, the outer surface 5 of the side wall 13 comprises a groove 19 extending in the circumferential direction for at least partly receiving the fixation strap and/or tape 18. The groove may be for receiving at least a part of the fixation means 18. For example, a fixation strap 18 may be sunk into the groove, such that the fixation strap for instance does not hinder a placement of the rooting plug into a container such as a pot or a cup of a tray for accommodating rooting plugs.

The rooting plug can be produced with any suitable manufacturing process, such as and is preferably formed as an integral part.

The rooting plug has preferably a tapered shape, more preferably in a downward direction. Said tapered shape may facilitate forming the rooting plug in and/or removing the rooting plug from a manufacturing mould. Besides, the tapered shape, especially the downwardly tapered shape, of the rooting plug may facilitate placement of the rooting plug into a receiving cavity.

In the shown embodiment, the structure of the plug body is substantially invariant in the longitudinal direction 11. This is, substantially horizontally cross sections of the plug body have substantially similar shapes and sizes. As noted above, it should be understood that slight variations and/or deviations are possible within the scope of the invention, such as the tapered shape of the rooting plug 1 which can form the substantially cylindrical shape of the rooting plug, and the groove 19 that does not alter the fact that the shown rooting plug can still be substantially invariant in the longitudinal direction 1.

It is noted that the rooting plug 1 is made from a substrate including organic and/or non-organic material for cultivation of plants. More specifically, the plug body is made from a substrate including material for cultivation of plants. Advantageously, the plug body is formed as an integral part. The substrate may be formed as a composition. More preferably, the composition and/or material is spongy and/or penetrable to growing roots. Such and other suitable substrate materials and/or compositions are known in the art. For example, the substrate material or composition may comprise organic fibres, e.g. coconut fibre, peat and/or bark. Here, the plug 1 comprises for instance a substrate composition including particles joined by a bind agent, such as a non-toxic and/or organic glue. The joined particles may e.g. comprise organic fibres and/or soil particles.

According to an aspect of the invention, there is provided a tray, comprising at least one rooting plug being within the scope of the invention. The tray can be any tray capable of carrying one or a multiple number of rooting plugs, and may for instance comprise one or multiple number sockets or cups for receiving rooting plugs.

According to a further aspect of the invention, there is provided a method of inserting at least a part of a root structure of a plant into a root chamber of a rooting plug. The method includes the step of providing the rooting plug, the rooting plug comprising a substantially cylindrical plug body having a top surface, an outer side surface and a bottom surface, the plug body further having a stem passage extending through the top surface of the plug body to the root chamber. The method further includes the step of laterally inserting the root structure into the root chamber through a receptive slot opening in the outer side surface of the plug body, the slot opening extending in a longitudinal direction from the bottom surface to the top surface and in a lateral direction from the outer surface to the root chamber and the stem passage. It is noted that the insertion step can be executed by hand, but may alternatively be automated. Thereto, it may be advantageous that the receptive slot opening is biased to be in an open state, such that there is no need to force the slot opening to be open.

In an advantageous embodiment of the method, the plug body can comprise a side wall surrounding the chamber and being provided with circumferential mutually facing end sections defining therebetween the slot opening. In said advantageous embodiment of the method, the method can further comprise the step of moving the side wall end sections in a circumferential direction from an open state wherein the end sections are offset towards a closed state wherein the end sections abut each other.

The invention is not restricted to the embodiments described above. It will be understood that many variants are possible.

As an example, the rooting plug can in an advantageous embodiment be provided with a, preferably resilient, bottom part for closing of the bottom side of the root chamber.

Further, it is noted that the dimensions of the rooting plug may vary from the shown embodiments. For example, the ratio between the height and the width of the plug may vary and can for instance be about 0.2, 0.5, 1, 1.7, 2.5, or 5, wherein the outer width of the rooting plug can for instance be about 0.3, 0.5, 1, 2, 5, 10, 15, 20 or 30 cm.

These and other variants will be apparent to the person skilled in the art and are considered to fall within the scope of the invention as formulated by the following claims.

## Claims

1. A rooting plug (1) made from a substrate including organic and/or non-organic material for cultivation of a plant, comprising a substantially cylindrical plug body (3) having a top surface (4), an outer side surface (5) and a bottom surface (6), the plug body (3) comprising a root chamber (7) for accommodating at least a part of a root structure (8) of a plant (2), the plug body (3) further comprising a stem passage (9) extending through the top surface (4) of the plug body (3) to the root chamber (7), the plug body (3) further having a receptive slot opening (10) in the outer side surface (5) of the plug body, the slot opening (10) extending in a longitudinal direction from the bottom surface (6) to the top surface (4) and in a lateral direction from the outer surface (5) to the root chamber (7) and the stem passage (9) for enabling a lateral insertion of the root structure into the root chamber,
wherein the plug body (3) comprises a side wall (13) surrounding the chamber (7) and being provided with circumferential mutually facing end sections (14, 15) defining therebetween the slot opening (10),
wherein the side wall end sections (14, 15) are movable in a circumferential direction defining an open state wherein the end sections are offset and a closed state wherein the end sections abut each other,
wherein, in the closed state, the root chamber (7) defines a cavity extending in the longitudinal direction;
**characterized in that** each of the side wall end sections (14, 15) comprises a substantially flat end surface, the corners between said end surfaces and the inner side surface (17) and/or the outer side surface (5) of the plug body (3) being substantially rounded off, for instance for counteracting damage to the root structure (8).

2. A rooting plug (1) according to claim 1, formed as an integral part.

3. A rooting plug (1) according to claim 1 or 2, wherein, in the open state, a width of the root chamber measured through and transverse to a central axis of the rooting plug is larger than the offset between the end sections of the side wall (14, 15).

4. A rooting plug (1) according to any of the preceding claims, wherein, in the closed state, a width of the root chamber (7) measured through and transverse to a central axis of the rooting plug is at least ten times larger than a distance between the end sections of the side wall (14, 15).

5. A rooting plug (1) according to any of the preceding claims, wherein a width of the root chamber (7) measured through and transverse to a central axis of the rooting plug is larger than at least 10% of the plug width measured along the dimension of the measured root chamber width.

6. A rooting plug (1) according to any of the preceding claims, wherein, in the closed state, the side wall (13) is arranged for securing the root structure (8) in the root chamber (7).

7. A rooting plug (1) according to any of the preceding claims, further comprising fixation means for substantial fixation of the plug in the closed state.

8. A rooting plug (1) according to any of the preceding claims, wherein the outer surface (5) of the side wall (13) comprises a groove (19) extending in the circumferential direction for at least partly receiving a fixation strap and/or tape (18).

9. A rooting plug according to any of the preceding claims, wherein the structure of the plug body is substantially invariant in the longitudinal direction.

10. A rooting plug (1) according to any of the preceding claims, wherein the substrate of organic and/or non-organic material is joined by a bind agent, such as a non-toxic and/or organic glue.

11. A rooting plug (1) according to any of the preceding claims, wherein the side wall end sections (14, 15), the plug body (3) and/or the rooting plug (1) are at least partly resilient, and wherein the side wall end sections (14, 15) are biased in the open state.

12. A rooting plug (1) according to any of the preceding claims, accommodating at least a part of a plant (2), preferably an orchid or bromeliad.

13. A tray, comprising at least one rooting plug (1) according to any of the preceding claims.

14. A method of inserting at least a part of a root structure (8) of a plant (2) into a rooting plug (1), **characterized in that** the method comprising the steps of:
providing a rooting plug according to claim 1;
laterally inserting the root structure into the root chamber (7) through the receptive slot opening (10) in the outer side surface (5) of the plug body (3), and moving the side wall end sections (14, 15) in a circumferential direction from an open state wherein the end sections are offset towards a closed state wherein the end sections abut each other and wherein the root chamber (7) defines then a cavity extending in the longitudinal direction.

## Patentansprüche

1. Einwurzelungsstecker (1), hergestellt aus einem Substrat enthaltend organisches und/oder anorganisches Material zur Kultivierung einer Pflanze, umfassend einen im Wesentlichen zylindrischen Steckerkörper (3) mit einer oberen Fläche (4), einer äußeren Seitenfläche (5) und einer unteren Fläche (6), der Steckerkörper (3) umfassend eine Wurzelkammer (7) zum Aufnehmen von mindestens einem Teil einer Wurzelstruktur (8) einer Pflanze (2), der Steckerkörper (3) ferner umfassend einen Stängeldurchgang (9), verlaufend durch die obere Fläche (4) des Steckerkörpers (3) zu der Wurzelkammer (7), der Steckerkörper (3) ferner versehen mit einer Aufnahmeschlitzöffnung (10) in der äußeren Seitenfläche (5) des Steckerkörpers, die Schlitzöffnung (10) verlaufend in einer Längsrichtung von der unteren Fläche (6) zu der oberen Fläche (4) und in einer seitlichen Richtung von der äußeren Fläche (5) zu der Wurzelkammer (7) und dem Stängeldurchgang (9), um ein seitliches Einsetzen der Wurzelstruktur in die Wurzelkammer zu ermöglichen,
wobei der Steckerkörper (3) eine die Kammer (7) umgebende Seitenwand (13) umfasst und mit umlaufenden, einander gegenüberliegenden Endabschnitten (14, 15), die dazwischen die Schlitzöffnung (10) definieren, versehen ist,
wobei die Seitenwand-Endabschnitte (14, 15) in einer Umfangrichtung beweglich sind, definierend einen offenen Zustand, in dem die Endabschnitte versetzt sind, und einen geschlossenen Zustand, in dem die Endabschnitte aneinander anstoßen,
wobei im geschlossenen Zustand die Wurzelkammer (7) einen in Längsrichtung verlaufenden Hohlraum definiert;
**dadurch gekennzeichnet, dass** jeder der Seitenwand-Endabschnitte (14, 15) eine im Wesentlichen flache Endfläche umfasst, wobei die Ecken zwischen den Endflächen und der inneren Seitenfläche (17) und/oder der äußeren Seitenfläche (5) des Steckerkörpers (3) im Wesentlichen gerundet sind, um beispielsweise Beschädigung der Wurzelstruktur (8) zu vermeiden.

2. Einwurzelungsstecker (1) nach Anspruch 1, gebildet als ein integraler Teil.

3. Einwurzelungsstecker (1) nach Anspruch 1 oder 2, wobei im offenen Zustand eine Breite der Wurzelkammer, gemessen durch eine und quer zu einer Mittelachse des Einwurzelungssteckers, breiter ist als der Versatz zwischen den Endabschnitten der Seitenwände (14, 15).

4. Einwurzelungsstecker (1) nach einem der vorhergehenden Ansprüche, wobei im geschlossenen Zustand eine Breite der Wurzelkammer (7), gemessen durch eine und quer zu einer Mittelachse des Einwurzelungssteckers mindestens zehn Mal breiter ist als ein Abstand zwischen den Endabschnitten der Seitenwand (14, 15).

5. Einwurzelungsstecker (1) nach einem der vorhergehenden Ansprüche, wobei eine Breite der Wurzelkammer (7), gemessen durch eine und quer zu einer Mittelachse des Einwurzelungssteckers breiter ist als mindestens 10 % der Steckerbreite, gemessen entlang der Abmessung der gemessenen Wurzelkammerbreite.

6. Einwurzelungsstecker (1) nach einem der vorhergehenden Ansprüche, wobei im geschlossenen Zustand die Seitenwand (13) angeordnet ist, um die Wurzelstruktur (8) in der Wurzelkammer (7) zu sichern.

7. Einwurzelungsstecker (1) nach einem der vorhergehenden Ansprüche, ferner umfassend Befestigungsmittel zur wesentlichen Befestigung des Steckers im geschlossenen Zustand.

8. Einwurzelungsstecker (1) nach einem der vorhergehenden Ansprüche, wobei die äußere Fläche (5) der Seitenwand (13) eine in Umfangrichtung verlaufende Rille (19) umfasst, um mindestens teilweise einen Befestigungsstreifen und/oder ein Befestigungsband (18) aufzunehmen.

9. Einwurzelungsstecker (1) nach einem der vorhergehenden Ansprüche, wobei die Struktur des Steckerkörpers im Wesentlichen gleichbleibend in der Längsrichtung ist.

10. Einwurzelungsstecker (1) nach einem der vorhergehenden Ansprüche, wobei das Substrat aus organischem und/oder anorganischem Material durch ein Bindemittel wie etwa einen nicht toxischen und/oder organischen Kleber verbunden ist.

11. Einwurzelungsstecker (1) nach einem der vorhergehenden Ansprüche, wobei die Seitenwand-Endabschnitte (14, 15), der Steckerkörper (3) und/oder der Einwurzelungsstecker (1) mindestens teilweise elastisch sind und wobei die Seitenwand-Endabschnitte (14, 15) im offenen Zustand geneigt sind.

12. Einwurzelungsstecker (1) nach einem der vorhergehenden Ansprüche, der mindestens einen Teil einer Pflanze (2), bevorzugt eine Orchidee oder eine Bromelie, aufnimmt.

13. Schale, umfassend mindestens einen Einwurzelungsstecker (1) nach einem der vorhergehenden Ansprüche.

14. Verfahren zum Einsetzen von mindestens einem Teil einer Wurzelstruktur (8) einer Pflanze (2) in einen Einwurzelungsstecker (1), **dadurch gekennzeichnet, dass** das Verfahren folgende Schritte umfasst:
Bereitstellung eines Einwurzelungssteckers nach Anspruch 1;
seitliches Einsetzen der Wurzelstruktur in die Wurzelkammer (7) durch die jeweilige Schlitzöffnung (10) in die äußere Seitenfläche (5) des Steckerkörpers (3) und Bewegen der Seitenwand-Endabschnitte (14, 15) in einer Umfangrichtung von einem offenen Zustand, in dem die Endabschnitte versetzt sind, zu einem geschlossenen Zustand, in dem die Endabschnitte aneinander anstoßen, und wobei die Wurzelkammer (7) dann einen in Längsrichtung verlaufenden Hohlraum definiert.

## Revendications

1. Bouchon d'enracinement (1) fabriqué à partir d'un substrat comprenant une matière organique et/ou non organique pour la culture d'une plante, comprenant un corps de bouchon substantiellement cylindrique (3) ayant une surface supérieure (4), une surface latérale extérieure (5) et une surface inférieure (6), le corps de bouchon (3) comprenant une chambre à racines (7) destinée à recevoir au moins une partie d'une structure de racine (8) d'une plante (2), le corps de bouchon (3) comprenant en outre un passage de tige (9) qui s'étend à travers la surface supérieure (4) du corps de bouchon (3), jusqu'à la chambre à racines (7), le corps de bouchon (3) comportant en outre une ouverture en fente réceptrice (10) dans la surface latérale extérieure (5) du corps de bouchon, l'ouverture en fente (10) s'étendant dans une direction longitudinale, de la surface inférieure (6) à la surface supérieure (4) et dans une direction latérale, de la surface extérieure (5) à la chambre à racines (7) et au passage de tige (9) pour permettre une insertion latérale de la structure de racine dans la chambre à racines,
dans lequel le corps de bouchon (3) comprend une paroi latérale (13) qui entoure la chambre (7) et qui est pourvue de sections d'extrémités périphériques qui se font face mutuellement (14, 15), définissant entre elles l'ouverture en fente (10),
dans lequel les sections d'extrémités de paroi latérale (14, 15) sont mobiles dans une direction périphérique qui définit un état ouvert dans lequel les sections d'extrémités sont décalées et un état fermé dans lequel les sections d'extrémités sont en appui l'une contre l'autre,
dans lequel, dans l'état fermé, la chambre à racines (7) définit une cavité qui s'étend dans la direction longitudinale ;
**caractérisé en ce que** chacune des sections d'extrémités de paroi latérale (14, 15) comprend une surface d'extrémité substantiellement plate, les angles entre lesdites surfaces d'extrémités et la surface latérale intérieure (17) et/ou la surface latérale extérieure (5) du corps de bouchon (3) étant substantiellement arrondis, par exemple pour limiter les dégâts causés à la structure de racine (8).

2. Bouchon d'enracinement (1) selon la revendication 1, se présentant sous la forme d'une pièce d'un seul tenant.

3. Bouchon d'enracinement (1) selon la revendication 1 ou 2, dans lequel, dans l'état ouvert, une largeur de la chambre à racines mesurée à travers et transversalement à un axe central du bouchon d'enracinement est plus grande que le décalage entre les sections d'extrémités de la paroi latérale (14, 15).

4. Bouchon d'enracinement (1) selon l'une quelconque des revendications précédentes, dans lequel, dans l'état fermé, une largeur de la chambre à racines (7) mesurée à travers et transversalement à un axe central du bouchon d'enracinement est au moins dix fois plus grande qu'une distance entre les sections d'extrémités de la paroi latérale (14, 15).

5. Bouchon d'enracinement (1) selon l'une quelconque des revendications précédentes, dans lequel une largeur de la chambre à racines (7) mesurée à travers et transversalement à un axe central du bouchon d'enracinement est plus grande qu'au moins 10 % de la largeur du bouchon mesurée le long de la dimension de la largeur de chambre à racines mesurée.

6. Bouchon d'enracinement (1) selon l'une quelconque des revendications précédentes, dans lequel, dans l'état fermé, la paroi latérale (13) est agencée pour fixer la structure de racine (8) dans la chambre à racines (7).

7. Bouchon d'enracinement (1) selon l'une quelconque des revendications précédentes, comprenant en outre un moyen de fixation permettant la fixation substantielle du bouchon dans l'état fermé.

8. Bouchon d'enracinement (1) selon l'une quelconque des revendications précédentes, dans lequel la surface extérieure (5) de la paroi latérale (13) comprend une rainure (19) qui s'étend dans la direction périphérique pour recevoir au moins partiellement une sangle de fixation et/ou un ruban (18).

9. Bouchon d'enracinement selon l'une quelconque des revendications précédentes, dans lequel la structure du corps de bouchon est substantiellement invariante dans la direction longitudinale.

10. Bouchon d'enracinement (1) selon l'une quelconque des revendications précédentes, dans lequel le substrat en matière organique et/ou non organique est aggloméré par un liant, comme une colle non toxique et/ou organique.

11. Bouchon d'enracinement (1) selon l'une quelconque des revendications précédentes, dans lequel les sections d'extrémités de la paroi latérale (14, 15), le corps de bouchon (3) et/ou le bouchon d'enracinement (1) sont au moins en partie résilients, et dans lequel les sections d'extrémités de la paroi latérale (14, 15) sont déformées dans l'état ouvert.

12. Bouchon d'enracinement (1) selon l'une quelconque des revendications précédentes, recevant au moins une partie d'une plante (2), de préférence une orchidée ou un bromélia.

13. Plateau comprenant au moins un bouchon d'enracinement (1) selon l'une quelconque des revendications précédentes.

14. Procédé d'insertion d'au moins une partie d'une structure de racine (8) d'une plante (2) dans un bouchon d'enracinement (1), **caractérisé en ce que** le procédé comprend les étapes suivantes :
fournir un bouchon d'enracinement (1) selon la revendication 1 ;
insérer latéralement la structure de racine dans la chambre à racines (7) à travers l'ouverture en fente réceptrice (10) formée dans la surface latérale extérieure (5) du corps de bouchon (3),
et déplacer les sections d'extrémités de la paroi latérale (14, 15) dans une direction périphérique, d'un état ouvert dans lequel les sections d'extrémités sont décalées vers un état fermé dans lequel les sections d'extrémités sont en appui l'une contre l'autre et dans lequel la chambre à racines (7) définit alors une cavité qui s'étend dans la direction longitudinale.
